# EUROPÄISCHE PATENTSCHRIFT

(11) **EP 3 236 221 B1**
(45) Veröffentlichungstag und Bekanntmachung des Hinweises auf die Patenterteilung: **25.11.2020**
(21) Anmeldenummer: 16166535.1
(22) Anmeldetag: 22.04.2016
(51) Int. Cl.: G01H 11/00

(54) **VIBRATIONS-SENSOR UND VERFAHREN ZUM BETREIBEN EINES VIBRATIONS-SENSORS**
VIBRATION SENSOR AND METHOD FOR OPERATING A VIBRATION SENSOR
CAPTEUR DE VIBRATION ET PROCÉDÉ DE FONCTIONNEMENT D'UN CAPTEUR DE VIBRATION

(43) Veröffentlichungstag der Anmeldung: 25.10.2017
(73) Patentinhaber: VEGA Grieshaber KG, 77709 Wolfach (DE)
(72) Erfinder: Dieterle, Levin, 77709 Oberwolfach (DE)
(74) Vertreter: Patentanwälte Bauer Vorberg Kayser

(56) Entgegenhaltungen:
- DE-A1- 10 014 724
- DE-A1-102014 101 372
- US-A- 5 646 339
- US-A1- 2006 156 798

## Beschreibung

Die vorliegende Erfindung betrifft einen Vibrationssensor gemäß Patentanspruch 1 und ein Verfahren zum Betreiben eines Vibrationssensors gemäß Patentanspruch 4.

Nach dem Stand der Technik sind Vibrationssensoren, die beispielsweise als Vibrationsgrenzschalter verwendet werden, bekannt, wobei der Vibrationssensor eine über einen Antrieb zu einer Schwingung anregbaren Membran aufweist, mittels der ein an der Membran angeordneter mechanischer Schwinger zu einer Schwingung anregbar ist. Abhängig von einem Bedeckungsstand des mechanischen Schwingers mit einem Medium sowie abhängig von Dichte und Viskosität dieses Mediums schwingt dieser mit einer charakteristischen Frequenz, die von dem Vibrationssensor detektiert werden und in ein Messsignal umgewandelt werden kann.

Aktuelle Vibrationssensoren regen zur Detektion der Anwesenheit eines Mediums Schwingungen senkrecht zu ihrer Oberfläche an und erzeugen so eine Längswelle (Longitudinalwelle) im Medium. Durch den Einfluss von Dichte und Viskosität des Mediums ändert sich dabei die Resonanzfrequenz und Amplitude des mechanischen Schwingers, welche registriert und zu einer Schaltentscheidung verarbeitet werden. In den meisten Fällen wird hierbei lediglich die Resonanzfrequenz ausgewertet.

Die Anwesenheit von Gasblasen auf dem schwingenden Teil des Sensors erhöht die mechanische Dämpfung des mechanischen Schwingers. Je nach Größe und Position der Blasen kann sich sogar ein Zustand ergeben, in dem der mechanische Schwinger so stark gedämpft ist, dass keine Resonanzfrequenz mehr ermittelt werden kann.

Anhaftungen von Medium an dem mechanischen Schwinger führen, aufgrund der zusätzlichen Masse auf den schwingfähigen Teilen des Sensors, zu einer Erniedrigung der Resonanzfrequenz.
Die zuvor beschriebenen Situationen können zu Fehldetektionen führen, was als Nachteil empfunden wird.

Es ist die Aufgabe der vorliegenden Erfindung, einen Vibrationssensor zur Verfügung zu stellen, der eine verbesserte Detektion der Anwesenheit eines Mediums ermöglicht und insbesondere Fehlmessungen aufgrund von Anhaftungen und Blasenbildung am mechanischen Schwinger reduziert.

Diese Aufgabe wird durch einen Vibrationssensor mit den Merkmalen des Patentanspruchs 1 gelöst.

Vorteilhafte Weiterbildungen sind in den abhängigen Patentansprüchen widergegeben.

Ein erfindungsgemäßer Vibrations-Sensor weist eine schwingfähige Anordnung mit einer mechanischen Schwingungsanordnung mit wenigstens einem Antrieb auf, der mit der mechanischen Schwingungsanordnung gekoppelt ist, zum Versetzen der mechanischen Schwingungsanordnung in Schwingung und/oder zum Abgreifen einer Schwingung der mechanischen Schwingungsanordnung, wobei die schwingungsfähige Anordnung derart ausgebildet ist, dass wenigstens zwei unterschiedlich orientiere Schwingungsmoden der mechanischen Schwingungsanordnung erregbar sind.

Diese Schwingungsmoden sind vorteilhafterweise derart ausgeprägt, dass die Bewegung des schwingfähigen Elementes bei den wenigstens zwei unterschiedlichen Schwingungsmoden im Wesentlichen entlang der größten bzw. kleinsten räumlichen Ausdehnungsrichtung des schwingfähigen Elementes erfolgt. Dies stellt sicher, dass die bei der einen Schwingungsmode eine Longitudinalwelle im Medium anregenden Fläche maximal wird, während die Fläche, welche eine Transversalwelle durch Scherung des Mediums anregt, minimal wird. Bei der zweiten Schwingungsmethode ist dies umgekehrt, so dass die Longitudinalwelle im Medium anregende Fläche minimiert und die eine Transversalwelle anregende Fläche maximiert wird.

Der vorliegenden Erfindung liegt die Erkenntnis zu Grunde, dass im Falle eine Anhaftung die Frequenz des mechanischen Schwingers, welcher nur die Resonanzfrequenz einer Schwingungsmode auswertet, derart gegenüber dem Leerzustand verschoben sein kann, dass die Elektronik dies fälschlicherweise als einen Bedeckungszustand interpretiert.

Diese auf Längs- und Querschwinger gleichermaßen, d. h. auf mechanisch Schwinger, die einerseits in der Ebene ihrer größten Ausdehnung und andererseits quer zu dieser Ebene, insbesondere senkrecht dazu, schwingen, wirkende Frequenzverschiebung kann durch die durch die Anhaftung zusätzlich auf den mechanischen Schwinger wirkende träge Masse erklärt werden. Diese kann zuverlässig detektiert werden, sodass durch die Möglichkeit zwei unterschiedlich orientierte Schwingungsmoden der mechanischen Schwingungsanordnung anzuregen ein Sensor geschaffen wird, mit dem Fehldetektionen deutlich reduziert werden können.

Des Weiteren liegt der vorliegenden Erfindung die Erkenntnis zu Grunde, dass bei einer Blasenbildung auf der Oberfläche des mechanischen Schwingers eine Longitudinalwelle im Medium nicht mehr hinreichend angeregt werden kann und daher eine zuverlässige Detektion nicht mehr möglich ist.

Eine einfache Ausgestaltung eines solchen Sensors kann erreicht werden, wenn die mechanische Schwingungsanordnung derart ausgebildet ist, dass wenigstens zwei relevante, insbesondere unterschiedliche Schwingungsmoden, vorzugsweise bei unterschiedlichen Frequenzen auftreten.

Durch eine entsprechende geometrische Ausgestaltung der mechanischen Schwingungsanordnung kann erreicht werden, dass die mechanische Schwingungsanordnung zwei unterschiedliche Resonanzfrequenzen aufweist, wobei eine Anregung mit den jeweiligen Resonanzfrequenzen zu Schwingungen in unterschiedlichen Richtungen führt. Eine entsprechende Ausgestaltung der mechanischen Schwingungsanordnung kann damit erreicht werden, dass bei einer Anregung der mechanischen Schwingungsanordnung mit einer ersten Frequenz eine Schwingungsmode angeregt wird, die beispielsweise eine Longitudinalwelle auf ein umgebendes Medium überträgt und bei einer Anregung mit einer zweiten Frequenz eine Schwingungsmode angeregt wird, die eine Transversalwelle auf ein umgebendes Medium überträgt. Auf diese Weise kann durch gezielte Anregung der mechanischen Schwingungsanordnung mit den unterschiedlichen Frequenzen abwechselnd die eine oder die andere Schwingungsmode angeregt und somit eine zuverlässige Messmethode zur Verfügung gestellt werden.

Für eine bessere Unterscheidbarkeit der jeweiligen Schwingungsmoden ist es vorteilhaft, wenn die Frequenz der Querschwingungsmode größer ist, als die der Längsschwingungsmode, da die Längsschwingungsmode bei eintauchen in ein Medium einen größeren Frequenzhub aufweist. Somit ist eine bessere Trennung und eindeutigere Unterscheidbarkeit der Frequenzen gewährleistet.

Bei dem erfindungsgemäßen Vibrations-sensor weist die mechanische Schwingungsanordnung eine Membran auf, die einerseits mit dem Antrieb und andererseits mit wenigstens einem mechanischen Schwinger gekoppelt ist, wobei der wenigstens eine mechanische Schwinger derart ausgebildet ist, dass er die unterschiedlichen Schwingungsmoden aufweist. Bei dem mechanischen Schwinger kann es sich bei passender Ausgestaltung des Antriebes auch um die Membran selbst handeln, falls entsprechende Schwingungsmoden angeregt werden können, wie beispielsweise Love-Wellen.

Solche Vibrations-Sensoren sind beispielweise aus DE 100 14 724 A1, US 2006/0156798 A1 und US 5,646,339 bekannt. Der Sensor wird in US 2006/0156798 A1 und US 5,646,339 als Oszillator eines Rastersondenmikroskops verwendet.

Der erfindungsgemäße Vibrations-Sensor zeichnet sich dadurch aus, dass der mechanische Schwinger eine Aufnahme und ein an der Aufnahme angeordnetes flächiges Paddel aufweist, wobei die Aufnahme und das Paddel um 90° gegeneinander gedreht angeordnet und derart ausgebildet sein, dass das Paddel bei Anregung mit einer ersten Frequenz senkrecht zu seiner Fläche und bei Anregung mit einer zweiten Frequenz in der Ebene der Fläche schwingt.

Um etwaig auf eine Aufnahme des Vibrationssensors wirkende Drehmomente zu kompensieren, weist die Schwingungsanordnung zwei mechanische Schwinger auf, die gegengleich ausgebildet sind, wobei die Paddel der mechanischen Schwinger bei Anregung jeweils in entgegengesetzte Richtungen schwingen.

Eine weitere Reduzierung der auf die Aufnahme wirkenden Kräfte und Drehmomente kann beispielsweise durch ein zu dem einen Paddel entgegengesetzt schwingendes Gegengewicht, welches keinen Kontakt mit dem Medium besitzt, erreicht werden.

Ein erfindungsgemäßes Verfahren zum Betreiben eines Vibrations-Sensors mit einer schwingfähigen Anordnung mit einer mechanischen Schwingungsanordnung und einem Antrieb, der mit der mechanischen Schwingungsanordnung gekoppelt ist zum Versetzen der mechanischen Schwingungsanordnung in Schwingung und/oder zum Abgreifen einer Schwingung der mechanischen Schwingungsanordnung gemäß Anspruch 1, ist dadurch gekennzeichnet, dass die schwingfähige Anordnung wechselweise mit wenigstens zwei unterschiedlich orientierte Schwingungsmoden der mechanischen Schwingungsanordnung angeregt wird. Durch wechselweise oder auch gleichzeitigen Anregung der mechanischen Schwingungsanordnung mit unterschiedlich orientierten Schwingungsmoden wird erreicht, dass bei einer Ansatz- oder Blasenbildung eine mögliche Fehldetektion durch Auswertung der beiden Schwingungsmoden und Vergleich der Änderung beiden Resonanzfrequenzen relativ zu den Resonanzfrequenzen des Leerzustandes mit deutlich höherer Zuverlässigkeit unterbunden werden kann.
Zusätzlich zu den Resonanzfrequenzen, kann es auch vorteilhaft sein, Amplituden sowie Phasenverschiebung zwischen Anrege und Empfangssignal in der Auswertung mit zu berücksichtigen.
Da die Anregung der unterschiedlich orientierten Schwingungsmoden der mechanischen Schwingungsanordnung mit wenigstens zwei unterschiedlichen Frequenzen erfolgt, kann auf einfache Weise durch Auswahl der Anregungsfrequenz des Antriebs bestimmt werden, welche Orientierung die angeregte Schwingungsmode der mechanischen Schwingungsanordnung haben soll.

In einer vorteilhaften Ausgestaltung sind mindestens zwei Antriebe vorgesehen , welche die mindestens zwei Schwingungsmoden unabhängig voneinander anregen können. Somit ist es auch möglich, Schwingungsmoden zu verwenden, welche nur einen geringen Frequenzabstand besitzen.

Die vorliegende Erfindung wird nachfolgend anhand von Ausführungsbeispielen unter Bezugnahme auf die beigefügten Figuren eingehend erläutert.

Es zeigen:
- Fig. 1: eine vorteilhafte Orientierung der Bewegungsrichtung der beiden Schwingungsmoden am Beispiel einer Oberfläche,
- Fig. 2: die Orientierung der Bewegungsrichtung der Schwingungsmoden am Beispiels eines Paddelquerschnittes
- Fig. 3: ein erstes Ausführungsbeispiel einer schwingfähigen Anordnung bei Anregung einer ersten Schwingungsmode zur Erzeugung von Longitudinalwellen in einem umgebenden Medium,
- Fig. 4: das Ausführungsbeispiel aus Figur 3 bei Anregung mit einer zweiten Schwingungsmode zur Erzeugung von Transversalwellen in einem umgebenden Medium,
- Fig. 5: ein zweites Ausführungsbeispiel einer schwingfähigen Anordnung und
- Fig. 6: ein drittes Ausführungsbeispiel einer schwingfähigen Anordnung.

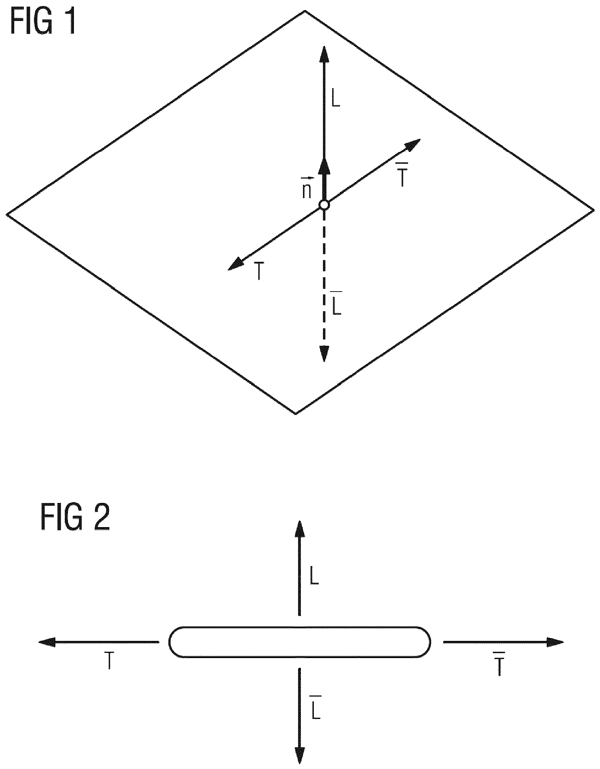

Figur 1 zeigt die geometrische Ausrichtung der Bewegungsrichtungen zweier Schwingungsmoden relativ zur Oberflächennormalen *̅n̅*̅ einer schwingfähigen Anordnung 100. Die Bewegungsrichtung (*L* und *L̅*) zur Anregung einer Longitudinalwelle ist dabei im Wesentlichen parallel der Oberflächennormalen *̅n̅*̅ und die Bewegungsrichtung (*T* und *T̅*) zur Anregung einer Schwerwelle (Transversalwelle) im Medium im Wesentlichen senkrecht dazu.

Figur 2 zeigt die geometrische Ausrichtung der Bewegungsrichtungen der beiden Schwingungsmoden relativ zur Oberflächennormalen *̅n̅*̅ des Querschnittes einer als Paddel ausgebildeten schwingfähigen Anordnung 100. Die Bewegungsrichtung (*L* und *L̅*) zur Anregung einer Longitudinalwelle ist dabei im Wesentlichen parallel zur Richtung mit der kleinsten geometrischen Ausdehnung des Paddels, während die Bewegungsrichtung (*T* und *T̅*) zur Anregung einer Schwerwelle (Transversalwelle) im Medium im Wesentlichen senkrecht dazu verläuft und im Wesentlichen parallel zur Richtung mit der Größten geometrischen Ausdehnung verläuft.

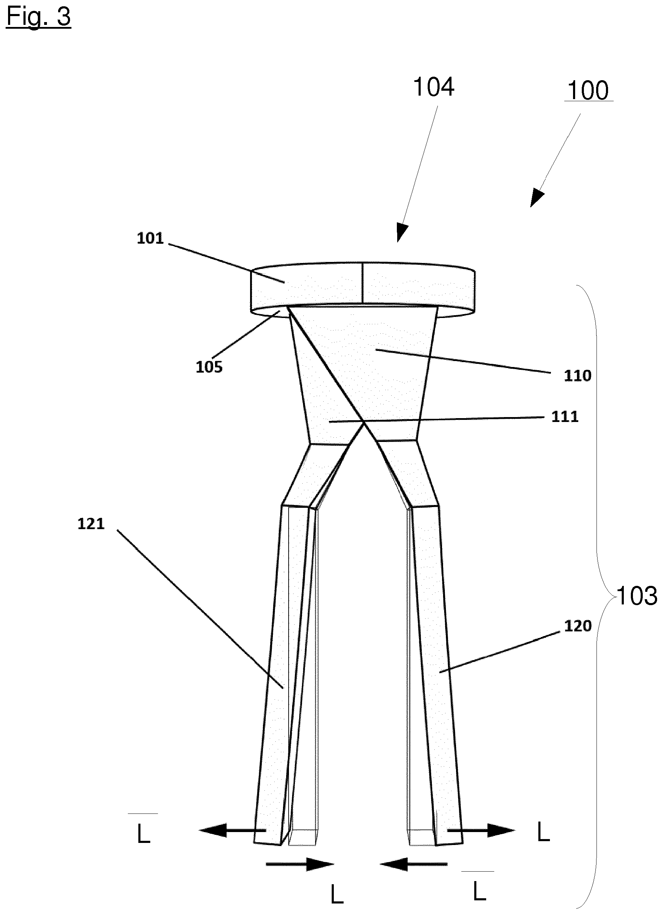

Figur 3 zeigt ein erstes Ausführungsbeispiel einer schwingfähigen Anordnung 100, wie sie bei einem Grenzstandsensor zur Detektion von Grenzständen, beispielsweise eines viskosen Mediums oder Schüttguts in einem Behälter zum Einsatz kommen kann.

Die schwingfähige Anordnung 100 ist im vorliegenden Ausführungsbeispiel durch ein über einen Antrieb 104 in Schwingung versetzbare mechanische Schwingungsanordnung 103 gebildet. Im vorliegenden Ausführungsbeispiel ist der Antrieb 104 über eine durch eine Aufnahme 101 gehaltene Membran 105 mit zwei jeweils an der Aufnahme 110, 111 angeordneten Paddeln 120, 121 gekoppelt. Die vorliegende Kombination aus Aufnahmen 110, 111 und Paddeln 120, 121 ist im vorliegenden Ausführungsbeispiel gegengleich ausgebildet, wobei die Paddel 120, 121 um 90° zur jeweiligen Aufnahme 110, 111 verdreht angeordnet sind. Die beiden Aufnahmen 110, 111 sind im vorliegenden Ausführungsbeispiel im Wesentlichen trapezförmig ausgebildet, wobei die Basis, d. h. die längere der beiden Grundseiten an der Membran 105 angeordnet ist. Die Paddel 120, 121 weisen im Wesentlichen rechteckige Grundfläche auf und sind über einen ebenfalls trapezförmig ausgebildeten Anpassungsbereich jeweils mit der zugeordneten Aufnahme 110, 111 verbunden.

Da im vorliegenden Ausführungsbeispiel die beiden Teile der mechanischen Schwingungsanordnung 100 gegengleich ausgebildet sind, werden durch eine Anregung der Membran 105 über den Antrieb 104 in den beiden Teilen Schwingungen in entgegengesetzte Richtung ausgelöst, sodass die Aufnahme 101 insgesamt nur eine reduzierte Kraftwirkung erfährt.

Im nicht erregten Zustand der schwingfähigen Anordnung 100 sind die Grundflächen der beiden Paddel 120, 121 im Wesentlichen parallel zueinander angeordnet und senkrecht zur Membran 105 ausgerichtet. Ebenso sind in diesem Zustand die Flächen der Aufnahme 110, 111 parallel zu einander ausgerichtet, wobei diese ebenfalls senkrecht auf der Membran 105 stehen.

In Figur 3 ist mit gestrichelten Linien die Grundposition und mit durchgezogenen Linien ein Ausschlag der Paddel 120, 121 dargestellt. Bei Anregung der schwingfähigen Anordnung 100 mit einer Frequenz der eine erste Schwingungsmode zur Anregung eine Longitudinalschwingung innerhalb eines die Paddel 120, 121 umgebenen Mediums auslöst bewegen sich die Paddel 120, 121 jeweils in entgegengesetzte Richtungen, das heißt, dass sie voneinander weg bzw. aufeinander zu schwingen. Die Schwingungsrichtungen dieser ersten Schwingungsmode sind in Figur 1 mit den mit *L* und *L̅* gekennzeichneten Pfeilen angedeutet. Es sei an dieser Stelle angemerkt, dass die Amplitude der angeregten Schwingung in vorliegenden Zeichnungen deutlich überhöht dargestellt ist um die Funktionsweise der schwingfähigen Anordnung 100 zu verdeutlichen.

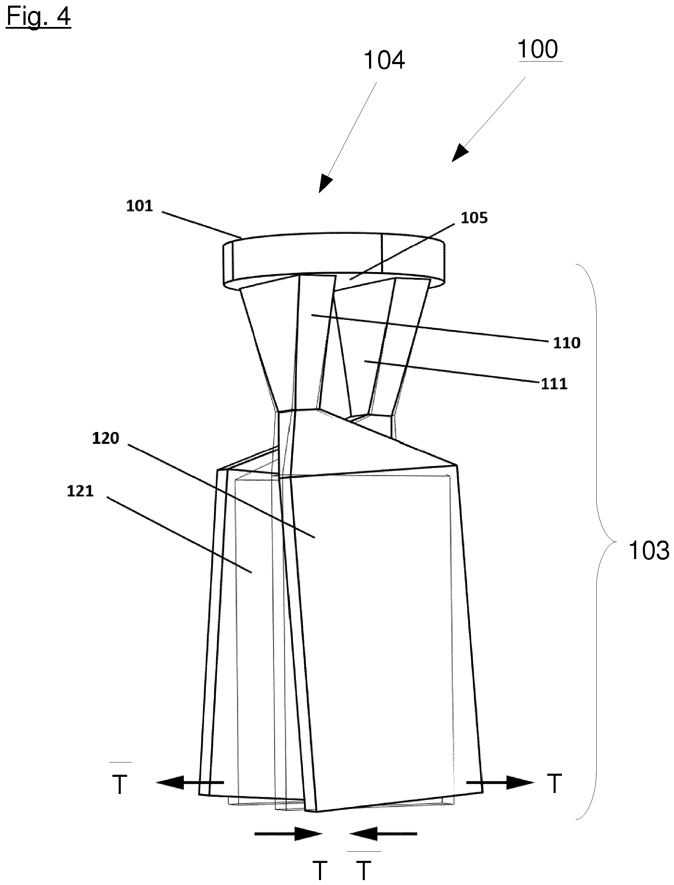

In Figur 4 ist die schwingfähige Anordnung 100 aus Figur 3 in einer um etwa 45° gedrehten Ansicht dargestellt, wobei in der in Figur 4 gezeigten Darstellung die Anregung einer Transversalschwingung in dem die Paddel 120, 121 umgegeben Mediums angedeutet ist. Die Schwingungsrichtung ist in dieser Ansicht durch die mit *T* und *T* gekennzeichneten Pfeile angedeutet.

Zur Anregung einer Transversalwelle in den die Paddel 120, 121 umgebenden Medium wird die mechanische Schwingungsanordnung 103 über den Antrieb 104 und die Membran 105 derart mit einer Frequenz beaufschlagt, dass sich in der mechanischen Schwingungsanordnung 103 eine Schwingungsmode ausbildet, die dazu führt, dass die Paddel 120, 121 sich im Wesentlichen in ihren jeweiligen Paddelebenen parallel zueinander in entgegengesetzte Richtungen bewegen.

Durch eine derartige Bewegung in der Paddelebene wird in einem die Paddel 120, 121 umgebenden Medium eine Art Scherung hervorgerufen, die zu einer Dämpfung und Frequenzänderung der Schwingung der Paddel 120, 121 führt. Insbesondere wenn an der Paddeloberfläche eine Ansatzbildung auftritt, wird die träge Masse der Paddel 120,121 vergrößert. Dies führt zu einer Veränderung der Resonanzfrequenz, die wiederum detektiert werden kann. Im Falle einer Anhaftung ist die relative Frequenzverschiebung im Vergleich zur der Frequenz in Luft von Längs- und Querschwingung annährend gleich, da sowohl in Längs-, als auch Querrichtung die gleiche Masse bewegt werden muss.

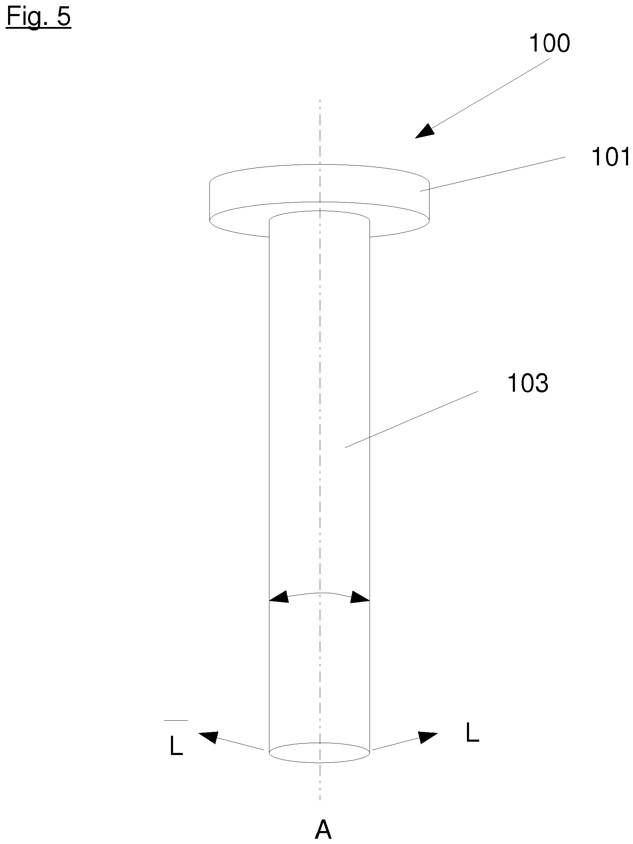

In Figur 5 ist ein zweites Ausführungsbeispiel einer schwingfähigen Anordnung 100 gezeigt, wobei in dem Figur 5 dargestellten Ausführungsbeispiel an der Aufnahme 101 eine mechanische Schwingungsanordnung 103 angeordnet ist, die im Wesentlichen die Form eines zylindrisch ausgebildeten Stabes mit einer Längsachse A aufweist. Hierbei sind auch andere radialsymmetrische geometrische Ausbildungen denkbar der Schwingungsanordnung 103 denkbar. Durch eine geeignete Anregung der mechanischen Schwingungsanordnung 103 kann entweder eine erste Schwingungsmode zur Anregung einer Longitudinalschwingung in einem die mechanische Schwingungsanordnung 103 umgebenden Medium angeregt werden oder eine zweite Schwingungsmode die im vorliegenden Ausführungsbeispiel eine Torsion der stabförmigen mechanischen Schwingungsanordnung 103 hervorruft, welche in einem die mechanische Schwingungsanordnung 103 umgebende Medium eine Transversalschwingung/Scherung hervorruft.

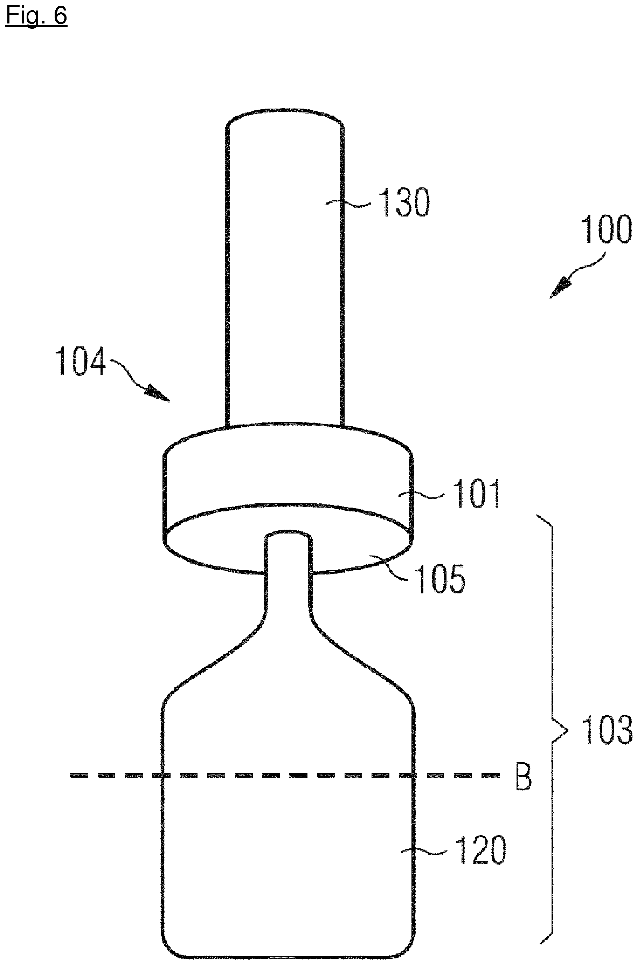

In Figur 6 ist ein drittes Ausführungsbeispiel einer schwingfähigen Anordnung 100 gezeigt. An der Aufnahme 101 gemäß dem Ausführungsbeispiel aus Fig. 4 ist vorliegend eine mechanische Schwingungsanordnung 103 angeordnet, die im Wesentlichen die Form eines Paddels aufweist. Durch eine geeignete Anregung der Schwingungsanordnung 103 durch einen Antrieb 104 kann sowohl eine Schwingungsmode zur Anregung einer Longitudinalschwingung in einem die mechanische Schwingungsanordnung 103 umgebenden Medium angeregt werden, als auch eine Schwingungsmode zur Anregung einer Transversalwelle.

Durch die Ausgestaltung mit nur einem Paddel wird verhindert, dass sich bei Abzug eines hochviskosen Mediums zwischen den Paddeln eine Brücke aus Medium ausbildet, welche durch die zusätzliche Kopplung der beiden Paddel zu falschen Schaltentscheidungen führen kann.

Durch die Verwendung eines passend ausgestalteten Gegenschwingers 130, welcher sich im Betrieb des Sensors entgegengesetzt zum Paddel 120 bewegt, werden die Reaktionskräfte und -momente, welche auf die Aufnahme 101 wirken, minimiert.

Es sei an dieser Stelle angemerkt, dass zur Realisierung der der vorliegenden Anmeldung zu Grunde liegende Erfindung eine Vielzahl verschiedener mechanischer Schwingungsanordnungen denkbar sind.

### Bezugszeichen

- 10: Vibrations-Sensor
- 110: Aufnahme
- 111: Aufnahme

- 100: schwingfähige Anordnung
- 101: Aufnahme
- 103: mechanische Schwingungsanordnung
- 104: Antrieb
- 105: Membran

- 120: Paddel
- 121: Paddel

- 130: Gegenschwinger

- f₁: erste Frequenz
- f₂: zweite Frequenz

- *L*: Longitudinalrichtung
- *L̅*: Longitudinalrichtung

- *T*: Transversalrichtung
- *T̅*: Transversalrichtung

- A: Längsachse
- B: Schnittebene

## Patentansprüche

1. Vibrations-Sensor (10) mit einer schwingfähigen Anordnung (100) mit einer mechanischen Schwingungsanordnung (103), und wenigstens einem Antrieb (104) der mit der mechanischen Schwingungsanordnung (103) gekoppelt ist, zum Versetzen der mechanischen Schwingungsanordnung (103) in Schwingung und/oder zum Abgreifen einer Schwingung der mechanischen Schwingungsanordnung (103), wobei die schwingfähige Anordnung (100) derart ausgebildet ist, dass wenigstens zwei unterschiedlich orientierte Schwingungsmoden der mechanischen Schwingungsanordnung (103) anregbar sind, wobei die mechanische Schwingungsanordnung (103) eine Membran (105) und wenigstens einen mit der Membran (105) gekoppelten mechanischen Schwinger (110, 120, 111, 121) aufweist, wobei der wenigstens eine mechanische Schwinger (110, 120, 111, 121) derart ausgebildet ist, dass wenigstens zwei relevanten Schwingungsmoden über den Antrieb (104) angeregt werden können,
**dadurch gekennzeichnet, dass** der mechanische Schwinger (110, 120, 111, 121) eine Aufnahme (110, 111) und ein an der Aufnahme angeordnetes flächiges Paddel (120, 121) aufweist, wobei die Aufnahme (110, 111) und das Paddel (120, 121) um 90° gegeneinander gedreht angeordnet und derart ausgebildet sind, dass das Paddel (120, 121) bei Anregung mit einer ersten Frequenz (f₁) senkrecht zu seiner Fläche und bei Anregung mit einer zweiten Frequenz (f₂) in der Ebene der Fläche schwingt, und wobei die Schwingungsanordnung (103) zwei mechanische Schwinger (110, 120, 111, 121) aufweist, die gegengleich ausgebildet sind, wobei die Paddel der mechanischen Schwinger (110, 120, 111, 121) bei Anregung jeweils in entgegengesetzte Richtungen (*L*, *L̅, T, T̅*) schwingen.

2. Vibrations-Sensor (10) gemäß Anspruch 1,
**dadurch gekennzeichnet, dass** die mechanische Schwingungsanordnung (103) derart ausgebildet ist, dass unterschiedliche Schwingungsmoden bei unterschiedlichen Frequenzen (f₁, f₂) auftreten.

3. Vibrations-Sensor (10) gemäß einem der vorhergehenden Ansprüche,
**dadurch gekennzeichnet, dass** die mechanische Schwingungsanordnung (103) derart ausgebildet ist, dass die in Bewegung entlang der größten bzw. kleinsten räumlichen Ausdehnungsrichtung des schwingfähigen Elementes erfolgt.

4. Verfahren zum Betreiben eines Vibrationssensors (10) mit einer schwingfähigen Anordnung (100) mit einer mechanischen Schwingungsanordnung (103), und einem Antrieb (104) der mit der mechanischen Schwingungsanordnung (103) gekoppelt ist, zum Versetzen der mechanischen Schwingungsanordnung (103) in Schwingung und/oder zum Abgreifen einer Schwingung der mechanischen Schwingungsanordnung (103) gemäß einem der Ansprüche 1 bis 3,
**dadurch gekennzeichnet, dass** die schwingfähige Anordnung wechselweise mit wenigstens zwei unterschiedlich orientierte Schwingungsmoden der mechanischen Schwingungsanordnung angeregt wird.

5. Verfahren gemäß Anspruch 4,
**dadurch gekennzeichnet, dass** die Anregung mit wenigstens zwei unterschiedlichen Frequenzen (f1, f2) erfolgt .

## Claims

1. A vibration sensor (10) comprising an assembly (100), which is capable of oscillating, with a mechanical oscillation assembly (103) and at least one drive unit (104) coupled with the mechanical oscillation assembly (103), for making the mechanical oscillation assembly (103) oscillate and/or picking up an oscillation of the mechanical oscillation assembly (103), wherein the assembly (100) capable of oscillating is configured in such a way that at least two differently oriented oscillation modes of the mechanical oscillation assembly (103) can be excited, wherein the mechanical oscillation assembly (103) has a diaphragm (105) and at least one mechanical oscillator (110, 120, 111, 121) coupled with the diaphragm (105), wherein the at least one mechanical oscillator (110, 120, 111, 121) is configured in such a way that at least two relevant oscillation modes can be excited via the drive unit (104),
**characterized in that** the mechanical oscillator (110, 120, 111, 121) has an accommodating portion (110, 111) and a planar paddle (120, 121) arranged on the accommodating portion, wherein the accommodating portion (110, 111) and the paddle (120, 121) are arranged so as to be twisted by 90° relative to one another and are configured in such a way that the paddle (120, 121), when excited with a first frequency (f₁), oscillates perpendicularly to its surface and, when excited with a second frequency (f₂), in the plane of the surface, and wherein the oscillation assembly (103) has two mechanical oscillators (110, 120, 111, 121) configured in a mirror-inverted manner, wherein the paddles of the mechanical oscillators (110, 120, 111, 121) respectively oscillate in opposite directions (*L, L̅, T, T̅*) when excited.

2. The vibration sensor (10) according to claim 1,
**characterized in that**
the mechanical oscillation assembly (103) is configured in such a way that different oscillation modes occur at different frequencies (f₁, f₂).

3. The vibration sensor (10) according to any one of the preceding claims,
**characterized in that**
the mechanical oscillation assembly (103) is configured in such a manner that the movement takes place along the largest or smallest extending direction in space of the member capable of oscillating.

4. A method for operating a vibration sensor (10) comprising an assembly (100), which is capable of oscillating, with a mechanical oscillation assembly (103) and a drive unit (104) coupled with the mechanical oscillation assembly (103), for making the mechanical oscillation assembly (103) oscillate and/or picking up an oscillation of the mechanical oscillation assembly (103) according to any one of the claims 1 to 3,
**characterized in that**
the assembly capable of oscillating is alternately excited with at least two differently oriented oscillation modes of the mechanical oscillation assembly.

5. The method according to claim 4,
**characterized in that**
the excitation takes place with at least two different frequencies (f1, f2).

## Revendications

1. Capteur de vibrations (10) comprenant un ensemble apte à vibrer (100) ayant un ensemble de vibration mécanique (103), et au moins un mécanisme d'entraînement (104) qui est couplé à l'ensemble de vibration mécanique (103), pour mettre en vibration l'ensemble de vibration mécanique (103) et/ou pour capter une vibration de l'ensemble de vibration mécanique (103), ledit ensemble apte à vibrer (100) étant conçu de telle sorte qu'au moins deux modes de vibration orientés différemment de l'ensemble de vibration mécanique (103) peuvent être excités, dans lequel ledit ensemble de vibration mécanique (103) comprend une membrane (105) et au moins un oscillateur mécanique (110, 120, 111, 121) couplé à la membrane (105), dans lequel ledit au moins un oscillateur mécanique (110, 120, 111, 121) est conçu de telle sorte qu'au moins deux modes de vibration pertinents peuvent être excités par ledit mécanisme d'entraînement (104), **caractérisé par le fait que** l'oscillateur mécanique (110, 120, 111, 121) présente un logement (110, 111) et une patte (120, 121) plate disposée sur ledit logement, dans lequel le logement (110, 111) et la patte (120, 121) sont disposés de manière à être tournés de 90° l'un par rapport à l'autre et sont conçus de telle manière que la patte (120, 121) vibre perpendiculairement à sa surface lorsqu'elle est excitée à une première fréquence (f₁) et vibre dans le plan de la surface lorsqu'elle est excitée à une deuxième fréquence (f₂), et dans lequel ledit ensemble de vibration (103) comprend deux oscillateurs mécaniques (110, 120, 111, 121) qui sont conçus de manière diamétralement opposée, les pattes des oscillateurs mécaniques (110, 120, 111, 121) vibrant chacun dans des sens opposés (*L, L̅, T, T̅*) lorsqu'ils sont excités.

2. Capteur de vibrations (10) selon la revendication 1, **caractérisé par le fait que** l'ensemble de vibration mécanique (103) est conçu de telle sorte que différents modes d'oscillation se produisent à différentes fréquences (f₁, f₂).

3. Capteur de vibrations (10) selon l'une quelconque des revendications précédentes, **caractérisé par le fait que** ledit ensemble de vibration mécanique (103) est conçu de telle manière que le mouvement se fait le long de la direction d'extension spatiale la plus grande ou bien la plus petite de l'élément apte à vibrer.

4. Procédé destiné à faire fonctionner un capteur de vibrations (10) comprenant un ensemble apte à vibrer (100) ayant un ensemble de vibration mécanique (103), et un mécanisme d'entraînement (104) qui est couplé à l'ensemble de vibration mécanique (103), pour mettre en vibration ledit ensemble de vibration mécanique (103) et/ou pour capter une vibration de l'ensemble de vibration mécanique (103) selon l'une quelconque des revendications 1 à 3, **caractérisé par le fait que** l'ensemble apte à vibrer est excité en alternance avec au moins deux modes d'oscillation orientés différemment de l'ensemble de vibration mécanique

5. Procédé selon la revendication 4, **caractérisé par le fait que** l'excitation se fait avec au moins deux fréquences (f1, f2) différentes.
